# FASCICULE DE BREVET EUROPEEN

(11) **EP 2 000 693 B1**
(45) Date de publication et mention de la délivrance du brevet: **28.09.2016**
(21) Numéro de dépôt: 07290967.4
(22) Date de dépôt: 01.08.2007
(51) Int. Cl.: F16D 55/36, F16D 55/00

(54) **Ensemble de roue et frein pour aéronef**
Anordnung aus Rad und Bremse eines Luftschiffs
Wheel and brake assembly for an aircraft

(30) Priorité: 05.06.2007 FR 0704022
(43) Date de publication de la demande: 10.12.2008
(73) Titulaire: Messier-Bugatti-Dowty, 78140 Vélizy-Villacoublay (FR)
(72) Inventeur: Souetre, Jean, 92100 Boulogne (FR)
(74) Mandataire: Parzy, Benjamin Alain

(56) Documents cités:
- FR-A- 2 147 706
- US-A- 2 017 715
- US-A- 4 131 321
- US-A- 4 944 370
- US-A- 5 944 147

## Description

L'invention concerne un ensemble de roue et frein pour aéronef.

### ARRIERE-PLAN DE L'INVENTION

On connaît des freins comportant une pile de disques qui comprend des disques rotors et stators qui s'étendent habituellement dans la jante à l'intérieur de la roue associée. Les disques rotors sont habituellement liés en rotation à la jante au moyen de clés ou clavettes

De tels freins sont connus par exemple des documents FR2147706 ou US4944370.

Les aéronefs actuellement envisagés conduisent à prévoir des freins dont les disques sont soit d'épaisseur plus importante, soit en nombre plus important, de sorte que les disques ne peuvent plus être entièrement logés à l'intérieur de la jante de la roue.

Le problème se pose alors d'entraîner en rotation avec la roue les disques rotors s'étendant à l'extérieur de la jante. Pour ce faire, une solution immédiate consiste à rallonger les clés pour les faire saillir à l'extérieur de la jante, dans la direction axiale. Dans un tel aménagement, les clés s'étendent alors en porte-à-faux de la jante et sont donc soumises à des efforts de flexion, risquant de briser les clés. Pour remédier à ce problème, on peut renforcer les clés en les agrandissant, ce qui a pour inconvénient d'ajouter du poids et de la complexité à l'ensemble de frein. En particulier, il devient difficile d'envisager des clés monoblocs avec la jante, et il convient de rapporter les clés de sorte qu'elles soient fixées en au moins deux points sur la longueur de celle-ci, avec inévitablement une partie d'extrémité en porte à faux saillant de la jante.

L'invention a pour objet un ensemble de roue et frein permettant l'entraînement en rotation des disques rotors s'étendant hors de la jante, ne présentant pas les inconvénients précités.

### BREVE DESCRIPTION DE L'INVENTION

L'invention a précisément pour objet un ensemble roue-frein pour aéronef comprenant une roue comportant une jante destinée à être montée à rotation sur un essieu de l'aéronef, et un frein comportant une pile de disques, dont des disques stators fixes en rotation et des disques rotors entraînés en rotation avec la roue.

Selon l'invention, l'ensemble comporte un tambour qui s'étend autour des disques pour être interposé entre les disques et la jante et qui comporte d'une part des moyens d'entraînement en rotation des disques rotors, et d'autre part des moyens de fixation pour fixer le tambour à la jante de la roue.

Le tambour forme ainsi un élément intermédiaire entre les disques rotors et la jante permettant de transmettre à celle-ci le couple de freinage généré par le frottement des disques entre eux.

Le tambour présente une rigidité en torsion importante de sorte que même s'il s'étend pour entraîner des disques situés loin hors de la jante, le couple de freinage généré par ces disques et transmis au tambour est repris par le tambour et transmis par celui-ci à la jante sans que le tambour ne subisse de déformation importante, contrairement à des clés fixées à la jante qui s'étendraient en porte-à-faux de celle-ci. Cette grande rigidité en torsion permet d'envisager un mode de liaison du tambour à la jante dans lequel le tambour est lié par des boulons s'étendant selon un diamètre du tambour, selon une ligne circonférencielle unique.

### BREVE DESCRIPTION DES DESSINS

L'invention sera mieux comprise à la lumière de la description qui suit en référence aux figures des dessins annexés parmi lesquels :
- la figure 1 est vue en coupe illustrant un ensemble roue-frein à tambour selon l'invention ;
- la figure 2 est une vue en perspective représentant schématiquement l'ensemble jante/tambour de la figure 1.

### DESCRIPTION DE L'INVENTION

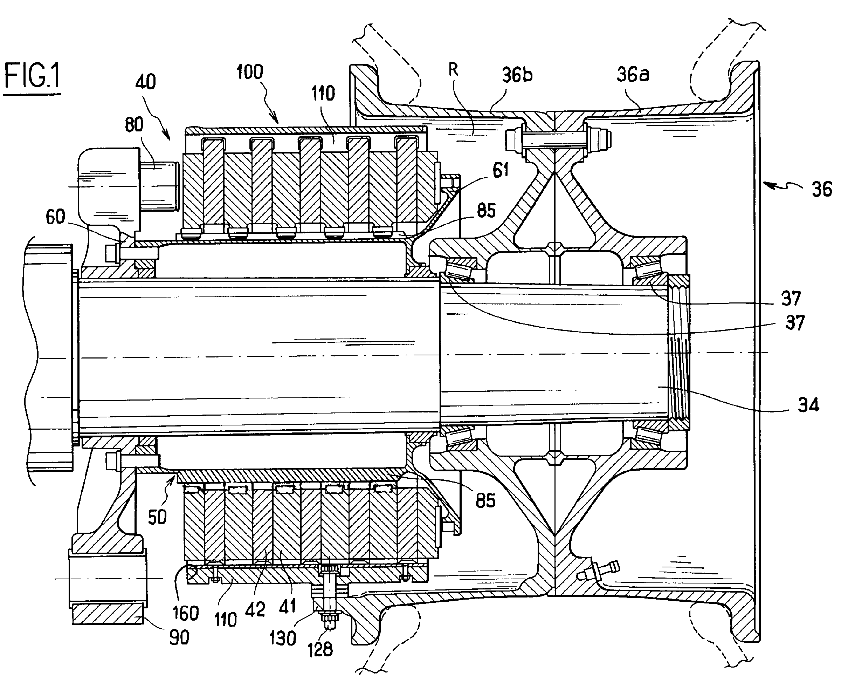

En référence à la figure 1, l'ensemble roue et frein de l'invention est ici illustré monté sur un essieu 34 d'atterrisseur. L'ensemble comprend une roue 36, qui comporte une jante, ici composée de deux demi-jantes 36a, 36b, et qui est montée à rotation sur l'essieu 34 au moyen de roulements à rouleaux coniques 37. La jante est destinée à recevoir un pneumatique (symbolisé en pointillés).

L'ensemble comprend par ailleurs un frein 40 comportant un tube de torsion 50 qui est enfilé sur l'essieu 34. Le tube de torsion 50 est solidarisé à une couronne 60 qui comporte une chape de reprise de couple 90 qui, par coopération avec un toc ou une barre de reprise de couple (non représentés), empêche le tube de torsion 50 de tourner autour de l'essieu 34. La couronne 60 porte des actionneurs de freinage 80, ici des pistons hydrauliques.

Sur le tube de torsion 50 sont enfilés des disques, dont, alternativement, des disques stators 41 qui sont fixes en rotation vis-à-vis du tube de torsion 50, et des disques rotors 42 qui sont libres en rotation vis-à-vis du tube de torsion 50 et qui tournent avec la roue 36 (seul un disque de chaque catégorie a été référencé). Les disques stators 41 sont arrêtés en rotation vis-à-vis du tube de torsion 50 par des clés ou clavettes 85 (l'une d'elles est vue en coupe sur la figure 1), ici réalisées intégralement avec le tube de torsion.

Le tube de torsion 50 comporte, à son extrémité opposée à la couronne 60, un organe de reprise d'effort de freinage 61, ici réalisé intégralement avec le tube de torsion 50. Lorsque les actionneurs 80 sont commandés, la pile de disques vient en appui contre l'organe de reprise d'effort 61, permettant aux actionneurs d'exercer une pression sur la pile de disques.

La jante, les disques et le tube de torsion s'étendent coaxialement à l'axe X de rotation de la roue défini par l'essieu 34.

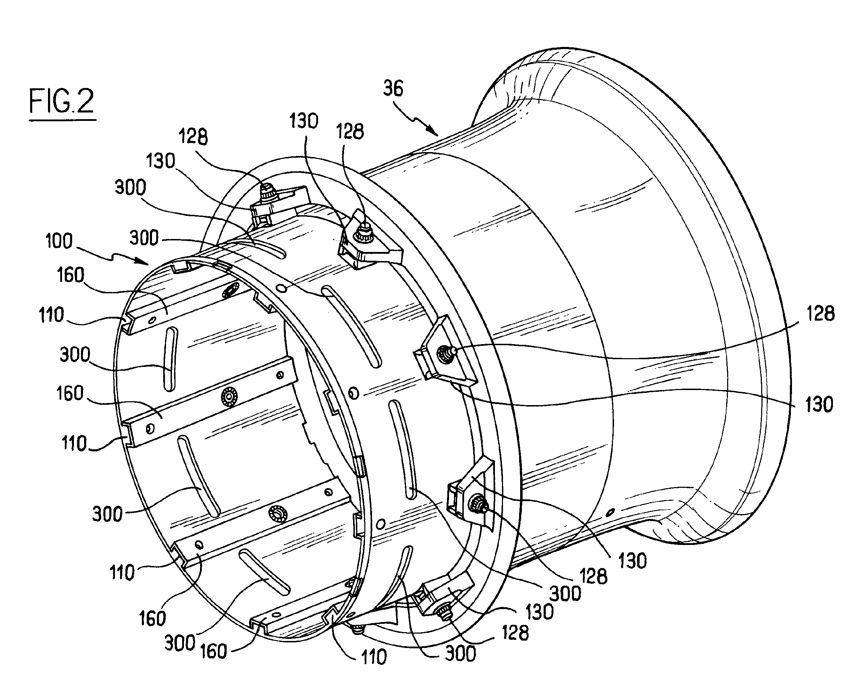

Selon l'invention, les disques sont entourés par un tambour 100 globalement cylindrique circulaire qui comporte des clés ou clavettes 110 s'étendant à l'intérieur du tambour 100 pour entraîner les disques rotor en rotation. Ici, les clés 110 sont réalisées intégralement avec le tambour 100. L'une d'elles est vue en coupe à la figure 1. Des boulons 128 s'étendent à travers le tambour, ici en traversant les clés 110, pour pénétrer dans des excroissances 130 latérales de la demi jante 36b afin de fixer le tambour 100 à la jante 36. Comme cela est particulièrement visible à la figure 2, les boulons 128 s'étendent selon un ligne circonférencielle du tambour 100, et forment ainsi une ligne unique de boulonnage qui s'étend donc dans un plan perpendiculaire à l'axe X. Une telle liaison entre le tambour et la jante est suffisante, compte tenu de la rigidité en torsion importante du tambour 100, pour transmettre efficacement un couple de freinage à la jante 36.

Comme cela est plus particulièrement visible à la figure 2, des tôles de protection 160 recouvrent les clés 110 du tambour 100 et sont rapportées par boulonnage sur les clés 110.

L'ensemble selon l'invention fonctionne de la façon suivante : on applique une pression à l'aide des actionneurs 80 sur les disques. Les disques rotors 42 frottent sur les disques stators 41. Les disques stators 41 sont arrêtés en rotation sur le tube de torsion et freinent les disques rotors 42 en générant un couple de freinage. Ce couple de freinage est transmis par les disques rotors 42 via les clés 110 au tambour 100, puis via les boulons 128 à la jante 36, ce qui a pour effet de freiner la roue.

Comme cela est particulièrement visible à la figure 1, la pile de disques ne s'étend pas entièrement dans la jante 36 de la roue, mais au moins partiellement à l'extérieur de celle-ci, de sorte que le tambour 100 s'étend au moins partiellement hors de la jante. Néanmoins, le tambour 100 présente une rigidité en torsion qui permet de transmettre le couple généré par les disques rotors, y compris ceux qui s'étendent à l'extérieur de la jante 36, sans subir d'importantes déformations.

L'utilisation d'un tambour permet donc d'installer des piles de disques de grande longueur pouvant s'étendre hors de la jante. Si, comme ici, la pile de disques est éloignée du voile central de la jante, les demi-jantes 36a, 36b peuvent alors être dessinées de façon sensiblement symétrique, ce qui diminue le coût de revient de la roue, et permet à celle-ci de travailler dans de meilleurs conditions, ce qui permet un gain de masse. En outre, le refroidissement des disques est facilité du fait d'un espace R s'étendant entre la pile de disques et le voile de la jante. A cet effet, et comme cela est visible à la figure 2, le tambour 100 est avantageusement pourvu d'orifices 300 assurant une ventilation des disques. Ici, les orifices de ventilation sont oblongs et arrangés en une rangée circonférencielle.

Enfin, le fait que la pile de disques soit éloignée de la jante limite l'échauffement de la jante sous l'effet de l'échauffement des disques. Cette disposition offre donc la possibilité de faire subir aux disques de frein des températures plus élevées, pour une même température acceptable de la jante et du pneumatique qu'elle porte. La possibilité d'atteindre dans les disques des températures plus élevées que celles qui auraient été permises si la pile de disques s'étendaient essentiellement à l'intérieur de la jante conduit à diminuer la masse des disques de frein, générant ainsi des économies appréciables.

Lors de la maintenance de l'ensemble roue-frein de l'invention, on remarquera que la jante et le tambour sont liés de sorte qu'ils peuvent être manipulés comme formant un ensemble unitaire, démontable en bloc, comme cela est particulièrement illustré à la figure 2. En effet, le tambour 100 est lié aux disques rotors 42 uniquement par les clés 110, qui laissent libres un déplacement axial du tambour 100 par rapport aux disques, de sorte qu'il est tout à fait possible de retirer la roue et le tambour simultanément.

De préférence, un tel tambour sera réalisé en aluminium, ayant un coefficient de dilatation proche du matériau utilisé pour fabriquer les jantes. En effet, le tambour 100 ne travaille qu'en torsion, est d'un diamètre important, et n'est pas soumis aux efforts de freinage imposés par les actionneurs. Il n'y a donc pas, a priori, besoin d'utiliser un matériau plus performant et donc plus onéreux, tel que le titane.

L'invention n'est pas limitée à ce qui vient d'être décrit, mais bien au contraire, englobe toute variante entrant dans le cadre des revendications.

En particulier, bien que dans l'exemple illustré, les moyens d'entraînement des disques rotors 42 par le tambour 100 sont ici des clés 110 réalisées intégralement avec le tambour 100, on pourra utiliser d'autres moyens d'entraînement. Par exemple, les clés 110 pourront être rapportées sur le tambour 100. Les clés 110 peuvent également être soudées au tambour 100.

De même, bien que les moyens de fixation du tambour à la jante ont été illustrés sous le forme de boulons s'étendant au travers des clés selon une ligne circonférencielle, l'invention n'est pas limitée à ce mode de liaison, et diverses variantes sont possibles dans le cadre de l'invention :
- les boulons peuvent s'étendre sur plusieurs rangées circonférencielles, par exemple en quinconce les uns des autres ;
- les boulons peuvent traverser le tambour ailleurs qu'au niveau de clés.

## Revendications

1. Ensemble de roue et frein pour aéronef comprenant :
- une roue qui comporte une jante (36) destinée à être montée sur un essieu (34) de l'aéronef ;
- un frein (40) qui comporte une pile de disques s'étendant coaxialement à la roue, avec alternativement des disques stators (41) fixes en rotation et des disques rotors (42) entraînés en rotation avec la roue (36),
- un tambour (100) s'étendant autour des disques (41, 42) pour être interposé entre les disques et la jante, le tambour (100) comportant des moyens d'entraînement pour entraîner les disques rotors (42) en rotation ainsi que des moyens de fixation pour fixer le tambour (100) à la jante de la roue (36) ;
**caractérisé en ce que** les moyens de fixation comportent des boulons (128) qui s'étendent radialement à travers le tambour en étant disposés dans un plan perpendiculaire à un axe (X) de rotation de la roue défini par l'essieu, les boulons s'étendant selon une ligne circonférentielle du tambour pour former une ligne unique de boulonnage du tambour à la jante, le tambour étant lié à la jante uniquement par les boulons.

2. Ensemble selon la revendication 1, dans lequel le tambour s'étend au moins partiellement à l'extérieur de la jante.

3. Ensemble selon la revendication 1, dans lequel les moyens d'entraînement comportent des clés (110) qui s'étendent à l'intérieur du tambour pour coopérer avec les disques rotors.

4. Ensemble selon la revendication 3, dans lequel les clés (110) sont construites en une pièce avec le tambour (100).

5. Ensemble selon la revendication 1, dans lequel les boulons de fixation du tambour à la jante pénètrent dans des excroissances (130) latérales de la jante.

6. Ensemble selon la revendication 5, dans lequel le tambour comporte sur sa surface interne des clés (110) pour entraîner les disques rotors en rotation avec le tambour, les boulons (128) de fixation du tambour à la jante s'étendant au travers desdites clés.

7. Ensemble selon la revendication 1, dans lequel le tambour est fixé à la jante de façon à former un ensemble unitaire démontable en bloc.

8. Ensemble selon la revendication 1, dans lequel le tambour (100) comporte des orifices de ventilation (300).

## Patentansprüche

1. Anordnung aus Rad und Bremse für ein Luftfahrzeug, umfassend:
- ein Rad, das eine Felge (36) umfasst, die dazu bestimmt ist, auf einer Radachse (34) des Luftfahrzeugs montiert zu werden;
- eine Bremse (40), die einen Stapel von Scheiben umfasst, der sich koaxial zu dem Rad erstreckt, mit abwechselnd drehfesten Statorscheiben (41) und mit dem Rad (36) in Rotation angetriebenen Rotorscheiben (42),
- eine Trommel (100), die sich um die Scheiben (41, 42) herum erstreckt, um zwischen den Scheiben und der Felge angeordnet zu sein, wobei die Trommel (100) Antriebsmittel zum Antreiben der Rotorscheiben (42) in Rotation sowie Befestigungsmittel zum Befestigen der Trommel (100) an der Felge des Rades (36) hat;
**dadurch gekennzeichnet, dass** die Befestigungsmittel Bolzen (128) umfassen, die sich radial durch die Trommel erstrecken und dabei in einer Ebene angeordnet sind, die senkrecht zu einer von der Radachse definierten Drehachse (X) des Rades ist, wobei sich die Bolzen entlang einer Umfangslinie der Trommel erstrecken, um eine einzige Bolzenverbindungslinie zur Bolzenverbindung der Trommel mit der Felge zu bilden, wobei die Trommel nur über die Bolzen mit der Felge verbunden ist.

2. Anordnung nach Anspruch 1, wobei sich die Trommel zumindest teilweise außerhalb der Felge erstreckt.

3. Anordnung nach Anspruch 1, wobei die Antriebsmittel Keile (110) umfassen, die sich im Inneren der Trommel erstrecken, um mit den Rotorscheiben zusammenzuwirken.

4. Anordnung nach Anspruch 3, wobei die Keile (110) einstückig mit der Trommel (100) ausgebildet sind.

5. Anordnung nach Anspruch 1, wobei die Bolzen zur Befestigung der Trommel an der Felge in seitliche Überstände (130) der Felge eindringen.

6. Anordnung nach Anspruch 5, wobei die Trommel auf ihrer Innenfläche Keile (110) umfasst, um die Rotorscheiben mit der Trommel in Rotation anzutreiben, wobei sich die Bolzen (128) zur Befestigung der Trommel an der Felge durch die genannten Keile erstrecken.

7. Anordnung nach Anspruch 1, wobei die Trommel an der Felge derart befestigt ist, dass sie eine als Ganzes abnehmbare unitäre Einheit bildet.

8. Anordnung nach Anspruch 1, wobei die Trommel (100) Ventilationsöffnungen (300) umfasst.

## Claims

1. A wheel-and-brake assembly for aircraft, comprising:
- a wheel having a rim (36) for mounting on an aircraft axle (34);
- a brake (40) comprising a stack of disks extending coaxially with the wheel, with alternating stator disks (41) that are stationary in rotation and rotor disks (42) that are driven to rotate with the wheel (36),
- a drum (100) extending around the disks (41, 42) for interposing between the disks and the rim, the drum (100) having driven means for driving the rotor disks (42) in rotation and fastener means for fastening the drum (100) to the rim of the wheel (36);
**characterized in that** the fastening means comprise bolts (128) that extend radially through the drum in a plane perpendicular to a rotation axis (X) of the wheel defined by the axle, the bolts extending along a circumferential line of the drum to form a single row for bolting the drum to the rim, the drum being connected to the rim only by the bolts.

2. An assembly according to claim 1, in which the drum extends at least in part outside the rim.

3. An assembly according to claim 1, in which the drive means comprise keys (110) extending inside the drum to co-operate with the rotor disks.

4. An assembly according to claim 3, in which the keys (110) are made integrally with the drum (100).

5. An assembly according to claim 1, in which the bolts for fastening the drum to the rim penetrate into lateral projections (130) from the rim.

6. An assembly according to claim 5, in which the drum includes keys (110) on its inside surface for driving the rotor disks in rotation with the drum, the bolts (128) for fastening the drum to the rim extending through said keys.

7. An assembly according to claim 1, in which the drum is fastened to the rim so as to form a unitary assembly that can be removed as a single piece.

8. An assembly according to claim 1, in which the drum (100) includes ventilation orifices (300).
